# EUROPÄISCHE PATENTSCHRIFT

(11) **EP 3 524 736 B1**
(45) Veröffentlichungstag und Bekanntmachung des Hinweises auf die Patenterteilung: **28.04.2021**
(21) Anmeldenummer: 19150565.0
(22) Anmeldetag: 07.01.2019
(51) Int. Cl.: E01C 23/088, E02F 9/08, E01C 23/08

(54) **BODENBEARBEITUNGSMASCHINE MIT STAURAUM BIETENDER WARTUNGSKLAPPE**
SOIL WORKING MACHINE WITH SERVICING PANEL PROVIDING A STORAGE AREA
MACHINE DE TRAITEMENT DU SOL POURVUE D'UN PANNEAU D'ACCÈS POUR L'ENTRETIEN AVEC ZONE DE STOCKAGE

(30) Priorität: 09.02.2018 DE 102018202077
(43) Veröffentlichungstag der Anmeldung: 14.08.2019
(73) Patentinhaber: Wirtgen GmbH, 53578 Windhagen (DE)
(72) Erfinder: Berning, Christian, 53909 Zülpich (DE); Stinner, Tobias, 57635 Weyerbusch (DE); Wilhelmi, Hardy, 53547 Dattenberg (DE); Barimani, Cyrus, 53639 Königswinter (DE)
(74) Vertreter: Ruttensperger Lachnit Trossin Gomoll

(56) Entgegenhaltungen:
- EP-A1- 3 091 128
- DE-A1-102013 009 031
- DE-A1-102014 010 488
- DE-A1-102015 007 562
- JP-A- 2002 013 161
- US-A1- 2015 159 344

## Beschreibung

Die vorliegende Erfindung betrifft eine Bodenbearbeitungsmaschine nach dem Oberbegriff des Anspruchs 1, wie etwa Straßenfräse, Recycler, Stabilisierer oder Surface-Miner, mit einem Fahrwerk und einem vom Fahrwerk getragenen Maschinenrahmen, wobei die Bodenbearbeitungsmaschine eine Fräswalze zur Bodenbearbeitung aufweist

Eine gattungsgemäße Bodenbearbeitungsmaschine ist aus DE 102014 010488 A1 bekannt. Die Maschine umfasst einen Maschinenrahmen, vordere und hintere Fahreinrichtungen und eine am Maschinenrahmen gelagerte Fräseinrichtung mit einer Fräswalze. Ferner ist ein zwischen einer Stauposition und einer Aufstiegposition bewegbarer Aufstieg vorhanden, vor dem ein Staufach mit bewegbarer Staufachabdeckung vorgesehen ist. Ein Bediener kann für den Fräsmeißelwechsel benötigte Werkzeuge und Ersatzteile im Staufach zugreifen.

Eine Bodenbearbeitungsmaschine ist aus der US 2015/0159344 A1 bekannt. Diese offenbart eine kettengestützte Planierraupe, deren Unterboden mit schwenkbaren Klappen ausgebildet ist. Die um zur Rollachse parallele Schwenkachsen schwenkbaren Klappen sind paarweise einander über eine Längsmittelebene hinweg gegenüberliegend angeordnet. Die Schwenkklappen, die gegen die Wirkung eines Torsionsfederstabs zu öffnen sind, sollen Wartungspersonal Zugang zur Antriebseinheit, Drehmomentwandler und zur Antriebswelle ermöglichen.

Aus der JP 2002-013161 A ist ein Bagger bekannt, dessen bezüglich eines Untergestells mit Kettenlaufwerken um eine Gierachse drehbarer Turm eine um eine gierachsenparallele Schwenkachse zu öffnende Wartungstür aufweist. Auf der Innenseite der Wartungstür ist ein nachfüllbarer Waschtank angeordnet.

Aus der DE 10 2015 007 562 A1 ist eine Straßenfräsmaschine mit einer Fräswalze als einer Arbeitsvorrichtung bekannt. Die Fräswalze befindet sich zwischen einem vorderen und einem hinteren Ketten-Teillaufwerk, welche gemeinsam das Kettenlaufwerk der Straßenfräsmaschine bilden. Die Straßenfräsmaschine weist eine um eine rollachsenparallele Schwenkachse schwenkbare Abdeckung auf, welche an einer Seitenfläche des Maschinenrahmens angelenkt ist und welche nach ihrem Verschwenken in die Wartungsposition einen Verbrennungsmotor der Straßenfräse von oben, also von einer vom Aufstandsuntergrund der Straßenfräsmaschine abgewandten Seite her zugänglich macht.

Aus der DE 10 2013 009 031 A1 ist eine Straßenfräse bekannt, deren Fräswalze als Arbeitsvorrichtung zwischen hinteren Kettenlaufwerken angeordnet ist. Der Maschinenrahmen trägt am Maschinenheck auf der Außenseite einen zwischen einer Verstauungsstellung und einer Arbeitsstellung klappbaren Wartungssitz.

Als eine weitere gattungsgemäße Bodenbearbeitungsmaschine ist beispielsweise eine Straßengroßfräse mit der Bezeichnung W 210i bekannt. Es handelt sich dabei um eine sogenannte Kaltfräse, deren Arbeitsvorrichtung in Gestalt einer rotierenden, an ihrem Außenumfang mit Fräsmeißeln bestückten Fräswalze einen sich unter ihr befindenden Boden von dessen Oberfläche aus abträgt, ohne den Boden zuvor zu erwärmen. Wie bei einer Straßengroßfräse üblich, befindet sich die Fräswalze etwa in der Längsmitte zwischen einem vorderen und einem hinteren Teilfahrwerk der Bodenbearbeitungsmaschine.

Bodenbearbeitungsmaschinen dürfen vorbestimmte Außenabmessungen nicht überschreiten, um ohne Sondergenehmigungen auf Tiefladern oder ähnlichen Transportmitteln im Straßenverkehr bewegt werden zu dürfen. Somit ist der an einer Bodenbearbeitungsmaschine verfügbare Raum begrenzt und nicht erweiterbar.

Es ist daher Aufgabe der vorliegenden Erfindung, die eingangs genannte Bodenbearbeitungsmaschine derart weiterzuentwickeln, dass der von ihr eingenommene Bauraum so effizient wie möglich für Betrieb oder/und Wartung der Bodenbearbeitungsmaschine nutzbar ist.

Diese Aufgabe wird erfindungsgemäß durch eine Bodenbearbeitungsmaschine mit allen Merkmalen des Anspruchs 1 gelöst. Eine solche Bodenbearbeitungsmaschine weist auf einer zum Aufstandsuntergrund der Maschine hin weisenden Unterseite des Maschinenrahmens eine zwischen einer angehobenen Betriebsbereitschaftsposition und einer abgesenkten Wartungsposition bewegliche Wartungsklappe auf, die auf ihrer in der Betriebsbereitschaftsposition vom Aufstandsuntergrund weg weisenden Innenseite wenigstens eine eine Wartungshandlung unterstützende Funktionsformation aufweist.

Somit kann auf der Unterseite des Maschinenrahmens nicht nur durch die Wartungsklappe ein Zugang von unten in den vom Maschinenrahmen umgrenzten Raum bereitgestellt werden, sondern überdies kann die Wartungsklappe selbst eine eine Wartungshandlung unterstützende Funktionsformation aufweisen. Die von der Funktionsformation unterstützte bzw. unterstützbare Wartungshandlung ist dabei erfindungsgemäß eine Wartungshandlung, welche gerade nicht an einem Aggregat vorgenommen wird, dass erst durch Absenken der Wartungsklappe erreichbar wird. Die Funktionsformation der Wartungsklappe unterstützt eine Wartungshandlung an der Fräswalze der Maschine.

Konkret kann die Funktionsformation einen Wartungssitz für einen zur Durchführung der Wartungshandlung bestimmten Mechaniker umfassen. Die an Bodenbearbeitungsmaschinen vorgesehenen Werkzeuge zur Bodenbearbeitung unterliegen je nach bearbeitetem Boden einem mehr oder weniger hohen Verschleiß und müssen daher in gewissen Abständen ersetzt werden. Im bevorzugten Fall einer Straßenfräse als einer Bodenbearbeitungsmaschine, mit einer Fräswalze als Arbeitsvorrichtung, sind diese Werkzeuge zur Bodenbearbeitung Fräsmeißel, die in Meißelwechselhaltern austauschbar an der Außenseite der Fräswalze aufgenommen sind. Erfindungsgemäß weist die Wartungsklappe ein oder mehrere Staufächer für sogenannte "Meißelkästen" auf, also für Behälter, in welchen ein Fräsmeißel oder eine Mehrzahl von Fräsmeißeln als Ersatz für bereits an einer Fräswalze angeordnete Fräsmeißel aufgenommen und transportabel bereitgestellt sein können.

Sofern die Wartungsklappe als Funktionsformation den oben genannten Wartungssitz aufweist, auf welchem ein Mechaniker, welcher auch der Maschinenführer sein kann, für eine Wartungshandlung wie das Austauschen von Fräsmeißeln Platz nehmen kann, kann dieser Wartungssitz grundsätzlich starr mit der Wartungsklappe verbunden sein. Dies kann jedoch unter Umständen bedeuten, dass der Wartungssitz in der angehobenen Betriebsbereitschaftsposition der Wartungsklappe unerwünscht in das Innere des Maschinenrahmens einragt, wofür unter Umständen konstruktiv Platz im Inneren des Maschinenrahmens geschaffen werden muss. Bevorzugt ist daher, dass der Wartungssitz zwischen einer Nicht-Gebrauchsstellung und einer Gebrauchsstellung verlagerbar ist. Beispielsweise kann der Wartungssitz dann, wenn die Wartungsklappe in ihre Wartungsposition abgesenkt ist, um eine Sitz Schwenkachse von seiner Nicht-Gebrauchsstellung in seine Gebrauchsstellung verschwenkbar sein. So stört der Wartungssitz auch in der Nicht-Gebrauchsstellung nicht, wenn die Wartungsklappe in ihre Betriebsbereitschaftsposition verbracht ist.

Grundsätzlich kann die Wartungsklappe in beliebiger Weise zwischen der angehobenen Betriebsbereitschaftsposition und der abgesenkten Wartungsposition beweglich sein. Bevorzugt ist die Wartungsklappe um eine Klappenschwenkachse schwenkbar zwischen den genannten Positionen. Dies bedeutet, dass entgegengesetzte Endbereiche der Wartungsklappe in der Wartungsposition unterschiedlich nahe an den Aufstandsuntergrund angenähert sind. Dabei kann der in der Wartungsposition stärker an den Aufstandsuntergrund angenäherte, nachfolgend als "Anlage-Endbereich" bezeichnete Endbereich, dazu ausgebildet sein, in der Wartungsposition auf einem Abschnitt des Fahrwerks aufzuliegen bzw. mit diesem in Anlageeingriff zu sein. Für einen solchen Anlageeingriff bietet sich insbesondere eine Abrollfläche eines auf dem Aufstandsuntergrund abrollenden Laufwerks an. Ein solches Laufwerk kann ein Kettenlaufwerk oder ein Radlaufwerk sein.

Üblicherweise ist der Maschinenrahmen relativ zum Fahrwerk höhenveränderlich, d. h. durch Relativbewegung des Fahrwerks relativ zum Maschinenrahmen kann die Höhe des Maschinenrahmens über dem Aufstandsuntergrund, auf welchem die Maschine aufsteht, verändert werden. Dann kann es sein, dass der Anlage-Endbereich nur dann in Anlageeingriff mit dem Abschnitt des Fahrwerks gelangt, wenn zuvor der Maschinenrahmen in einen vorbestimmten Abstandsbereich zum Aufstandsuntergrund verlagert wurde.

Um eine möglichst große Anlagefläche des Anlage-Endbereichs mit dem Abschnitt des Fahrwerks erzielen zu können, kann der Anlage-Endbereich abgewinkelt sein. Somit kann der Anlage-Endbereich beispielsweise zwei relativ zueinander abgewinkelte Flächenbereiche, insbesondere ebene Flächenbereiche, aufweisen, von welchen jeder in Anlage mit einem anderen Abschnitt des Fahrwerks gelangen kann, wenn der Maschinenrahmen in einen vorbestimmten Abstandsbereich über dem Aufstandsuntergrund verlagert wurde. Eine Abwinkelachse, um welche zwei benachbarte Flächenbereiche der Wartungsklappe relativ zueinander abgewinkelt sind, ist vorzugsweise zur Klappenschwenkachse der Wartungsklappe oder/und zur Nickachse der Maschine parallel. Dies gilt vorzugsweise für jede Abwinkelachse, falls die Wartungsklappe mehrere zueinander abgewinkelte Flächenbereiche aufweist.

Es kann jedoch auch nur einer von zwei zueinander abgewinkelten Flächenbereichen des Anlage-Endbereichs in Anlageeingriff mit dem Abschnitt des Fahrwerks gelangen, beispielsweise der vom Längsende des Anlage-Endbereichs weiter entfernt gelegene Flächenbereich. Dann kann der relativ zu diesem abgewinkelte, dem Längsende des Anlage-Endbereichs näher gelegene Flächenbereich als Abschirmung eines in der Nähe der Wartungsklappe arbeitenden Mechanikers/Maschinenführers gegenüber dem Fahrwerk dienen. Gerade bei den häufig verwendeten robusten Kettenlaufwerken können zwischen aufeinanderfolgenden Kettengliedern Spalte bestehen, in welche während Wartungsarbeiten Gegenstände hineinfallen können und die erst geborgen werden müssen, bevor die Maschine nach der Wartung ihren Betrieb wieder aufnehmen kann. Die oben beschriebene Abschirmung des Fahrwerkabschnitts durch einen Flächenbereich des Anlage-Endbereichs dient dann der Vermeidung unnötiger Stillstandszeiten der Maschine.

Ganz grundsätzlich kann die Wartungsklappe lediglich ein bewegliches Teil im Außenbereich des Maschinenrahmens sein. Bevorzugt dient sie jedoch nicht nur als Stauraum und vorzugsweise als Träger eines Wartungssitzes, sondern auch dem wahlweisen Freigeben oder Verschließen einer Wartungsöffnung am Maschinenrahmen. Bevorzugt weist daher der Maschinenrahmen an seiner Unterseite eine Wartungsöffnung auf, welche einen Zugang zu einer Funktionsbaugruppe der Bodenbearbeitungsmaschine ermöglicht, wobei die Wartungsklappe in ihrer Betriebsbereitschaftsposition die Wartungsöffnung verschließt und in ihrer Wartungsposition freigibt. Bevorzugt ist die Funktionsbaugruppe eine Brennkraftmaschine der Bodenbearbeitungsmaschine, welche in der Regel zentrale Energie- und Kraftquelle der Bodenbearbeitungsmaschine ist. Die Brennkraftmaschine ist dann nicht nur wie gewöhnlich von oben durch Anheben einer Motorhaube erreichbar, sondern auch von unten durch die Wartungsöffnung.

Bevorzugt weist das Fahrwerk ein dem vorderen Maschinenende näher gelegenes vorderes Teilfahrwerk, etwa umfassend zwei bei Geradeausfahrt parallele Laufwerke, und ein dem hinteren Maschinenende näher gelegenes hinteres Teilfahrwerk auf, letzteres bevorzugt wiederum umfassend zwei bei Geradeausfahrt parallele Laufwerke, wobei die Arbeitsvorrichtung längs der Rollachse der Maschine zwischen dem vorderen und dem hinteren Teilfahrwerk angeordnet ist. Eine solche Anordnung ist beispielsweise von sogenannten "Straßengroßfräsen" bekannt. Bevorzugt ist die Wartungsklappe dann zwischen einem der Teilfahrwerke und der Arbeitsvorrichtung angeordnet, sodass die wenigstens eine an der Wartungsklappe vorgesehene Funktionsformation eine Wartung der Fräswalze unterstützen kann. Einer Wartung steht dabei eine Reparatur der Fräswalze gleich. Während eine Reparatur jedoch ein unvorhersehbares Ereignis ist, sind Wartungsarbeiten üblicherweise anhand vor definierter Ereignisse auszuführen, wie dem Ablauf von einer vorbestimmten Anzahl an Betriebsstunden oder/und dem Zurücklegen einer vorbestimmten Bodenbearbeitungsstrecke, und sind somit planbar.

Da der durch die Wartungsöffnung bevorzugt zugängliche Verbrennungsmotor üblicherweise dem Heck der Bodenbearbeitungsmaschine näher gelegen ist als ihrer Front, befindet sich die Wartungsklappe vorzugsweise zwischen dem hinteren Teilfahrwerk und der Fräswalze. Auch erfolgt die Wartung der Arbeitsvorrichtung zur Fräsbearbeitung des Bodens üblicherweise von der hinteren Seite aus, da sich vorne das Transportband zum Abtransport des Fräsgutes befindet.

Da die Wartungsklappe ein oder mehrere Staufächer zur Aufnahme der oben genannten Meißelkästen aufweist kann die Wartungsklappe ein erhebliches Gewicht besitzen. Zur Unterstützung ihrer Bewegung zwischen Betriebsbereitschaftsposition und Wartungsposition ist es daher bevorzugt, wenn die Bodenbearbeitungsmaschine einen Aktuator aufweist, welcher zwischen dem Maschinenrahmen und der Wartungsklappe derart angeordnet ist, dass durch seine Betätigung die Wartungsklappe zu einer Bewegung zwischen ihren Positionen: Betriebsbereitschaftsposition und Wartungsposition, antreibbar ist. Dann muss die Wartungsklappe nicht oder wenigstens nicht allein durch Muskelkraft bewegt werden.

Wie oben bereits angedeutet wurde, kann die Wartungsklappe zwischen ihren Positionen: Betriebsbereitschaftsposition und Wartungsposition, um eine Klappenschwenkachse verschwenkbar sein. Die Klappenschwenkachse kann dabei ortsveränderlich sein, etwa dann, wenn die Wartungsklappe über ein Viergelenk-Getriebe beweglich mit dem übrigen Maschinenrahmen gekoppelt ist. Dies kann kinematisch vorteilhaft sein, um die Wartungsklappe kollisionsfrei von der Betriebsbereitschaftsposition in die Wartungsposition zu Verschwenken. Zu der Verschwenkbewegung tritt dann ein translatorischer Bewegungsanteil hinzu. Allerdings sind Viergelenk-Getriebe aufwendig. Aus Gründen einer möglichst einfachen und wenig fehleranfälligen Gestaltung ist daher die Wartungsklappe zwischen ihren genannten Positionen bevorzugt nur verschwenkbar. Unabhängig davon, ob die Wartungsklappe nur verschwenkbar oder auch translatorisch beweglich ist, ist die die Schwenkbewegung der Wartungsklappe bestimmende Klappenschwenkachse bevorzugt parallel zur Nickachse der Maschine orientiert. Da für den bevorzugten Anwendungsfall einer Straßenfräse auch die Rotationsachse der Fräswalze parallel zur Nickachse der Maschine orientiert ist kann durch die genannte bevorzugte Orientierung der Klappenschwenkachse die Wartungsklappe in ihre Wartungsposition verbracht werden, ohne dass durch die Wartungsklappe auch nur ein kleiner Abschnitt der Fräswalze verdeckt würde.

Auch wenn dadurch erhebliche Betätigungskräfte erforderlich werden, ist es bevorzugt, wenn der Aktuator näher bei demjenigen Endbereich der Wartungsklappe angeordnet ist, welcher näher bei der Klappenschwenkachse gelegen ist. Dann nämlich ist der Anlage-Endbereich durch den Aktuator ungestört, sodass ein nahe des Anlage-Endbereichs arbeitender Mechaniker/Maschinenführer einen großen Bewegungsraum zur Verfügung hat, ohne befürchten zu müssen, mit dem Aktuator zu kollidieren.

Die vorliegende Erfindung wird nachfolgend anhand der beiliegenden Zeichnungen näher erläutert. Es stellt dar:
- Figur 1: eine grobschematische Seitenansicht einer Bodenbearbeitungsmaschine gemäß einer Ausführungsform der vorliegenden Erfindung, mit einer Wartungsklappe in der absenkten Wartungsposition,
- Figur 2: eine schematische perspektivische Ansicht der Innenseite einer mit Staufächern für Meißelkästen versehenen Wartungsklappe, nun in der Betriebsbereitschaftsposition,
- Figur 3: eine schematische Unteransicht eines hinteren, dem Maschinenheck näheren Bereichs der Maschine von Figur 1, mit der Wartungsklappe in der Betriebsbereitschaftsposition .

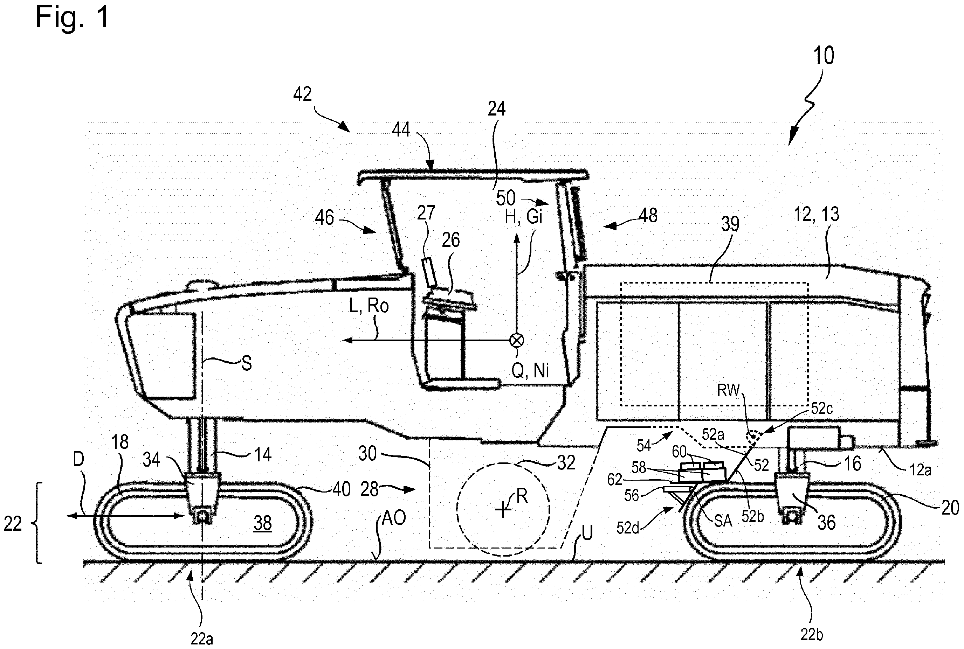

In Figur 1 ist eine erfindungsgemäße Ausführungsform einer Bodenbearbeitungsmaschine in Gestalt einer Boden- oder Straßengroßfräse allgemein mit 10 bezeichnet. Sie umfasst einen Maschinenrahmen 12, welcher das Grundgerüst für einen Maschinenkörper 13 bildet. Der Maschinenkörper 13 umfasst den Maschinenrahmen 12 und mit dem Maschinenrahmen 12 verbundene, gegebenenfalls relativ zu diesem bewegliche Bauteile der Maschine 10.

Der Maschinenkörper 13 umfasst vordere Hubsäulen 14 und hintere Hubsäulen 16, welche einenends mit dem Maschinenrahmen 12 und anderenends mit vorderen Laufwerken 18 bzw. mit hinteren Laufwerken 20 verbunden sind. Der Abstand des Maschinenrahmens 12 von den Laufwerken 18 und 20 ist durch die Hubsäulen 14 und 16 veränderbar.

Die Laufwerke 18 und 20 sind beispielhaft als Kettenlaufwerke dargestellt. Einzelne oder alle Laufwerke 18 oder/und 20 können abweichend hiervon auch Radlaufwerke sein.

Der Betrachter von Figur 1 blickt auf die Bodenbearbeitungsmaschine oder kurz "Maschine" 10 in Richtung der zur Zeichenebene von Figur 1 orthogonalen Maschinenquerrichtung Q. Eine zur Maschinenquerrichtung Q orthogonale Maschinenlängsrichtung ist mit L bezeichnet und verläuft parallel zur Zeichenebene von Figur 1. Eine Maschinenhöhenrichtung H verläuft ebenfalls parallel zur Zeichenebene von Figur 1 und orthogonal zur Maschinenlängs- und zur Maschinenquerrichtung L bzw. Q. Die Pfeilspitze der Maschinenlängsrichtung L in Figur 1 weist in Vorwärtsrichtung. Die Maschinenhöhenrichtung H verläuft parallel zur Gierachse Gi der Maschine 10, die Maschinenlängsrichtung L verläuft parallel zur Rollachse Ro und die Maschinenquerrichtung Q verläuft parallel zur Nickachse Ni.

Die Bodenbearbeitungsmaschine 10 weist einen Fahrstand 24 auf, von dem aus ein Maschinenführer über ein Bedienpult 26 die Maschine 10 steuern kann. Das Bedienpult 26 weist eine Informationsschnittstellenvorrichtung 27 in Gestalt eines Bediendisplays auf.

Unter dem Maschinenrahmen 12 ist eine Arbeitsbaugruppe 28 angeordnet, hier beispielhaft als Fräsbaugruppe 28 mit einer in einem Fräswalzenkasten 30 aufgenommenen Fräswalze 32, die um eine in Maschinenquerrichtung Q verlaufende Fräsachse R rotierbar ist, um damit während einer Bodenbearbeitung Untergrundmaterial ausgehend von der Aufstandsoberfläche AO des Untergrunds U mit einer durch die relative Höhenlage des Maschinenrahmens 12 bestimmten Frästiefe abtragen zu können. Alternativ oder zusätzlich kann die Fräswalze 32 relativ zum Maschinenrahmen 12 höhenverstellbar an diesem aufgenommen sein.

Die Höhenverstellbarkeit des Maschinenrahmens 12 durch die Hubsäulen 14 und 16 dient auch der Einstellung der Fräs- oder allgemein Arbeitstiefe der Maschine 10 bei der Bodenbearbeitung. Es handelt sich bei der beispielhaft dargestellten Bodenbearbeitungsmaschine 10 um eine Großfräse, für die die Anordnung der Fräsbaugruppe 28 in Maschinenlängsrichtung L zwischen den vorderen und den hinteren Laufwerken 18 bzw. 20 typisch ist. Derartige Großfräsen oder auch bodenabtragende Maschinen im Allgemeinen können ein Transportband aufweisen, um abgetragenes Bodenmaterial von der Maschine 10 weg zu transportieren. Ein auch bei der Maschine 10 grundsätzlich vorhandenes Transportband ist aus Gründen besserer Übersichtlichkeit in Figur 1 nicht dargestellt.

In der Seitenansicht von Figur 1 nicht zu erkennen ist, dass die Maschine 10 sowohl in ihrem vorderen Endbereich als auch in ihrem hinteren Endbereich jeweils zwei Hubsäulen 14 bzw. 16 mit jeweils einem damit verbundenen Laufwerk 18 bzw. 20 aufweist. Die vorderen Hubsäulen 14 sind in weiterhin an sich bekannter Weise jeweils mittels einer Laufwerk-Verbindungsstruktur 34, etwa einer das Laufwerk 18 in Maschinenquerrichtung Q übergreifenden Verbindungsgabel, mit den Laufwerken 18 gekoppelt. Die hinteren Hubsäulen 16 sind mit ihrem jeweiligen Laufwerk 20 über eine mit der Laufwerk-Verbindungsstruktur 34 identisch aufgebaute Laufwerk-Verbindungsstruktur 36 verbunden. Die Laufwerke 18 und 20 sind im Wesentlichen identisch aufgebaut und bilden das Fahrwerk 22 der Maschine. Die vorderen Laufwerke 18 bilden ein vorderes Teilfahrwerk 22a und die hinteren Laufwerken 20 bilden ein hinteres Teilfahrwerk 22b. Die Laufwerke 18 und 20 sind motorisch angetrieben, in der Regel durch einen nicht dargestellten Hydromotor.

Die Antriebskraftquelle der Maschine 10 bildet eine am Maschinenrahmen 12 aufgenommene Brennkraftmaschine 39. Durch sie wird die Fräswalze 32 im dargestellten Ausführungsbeispiel zur Drehung angetrieben. Durch die Leistung der Brennkraftmaschine 39 wird außerdem an der Maschine 10 ein Hydraulikdruckreservoir bereitgestellt, durch welches Hydromotoren und hydraulische Aktuatoren an der Maschine betreibbar sind. Die Brennkraftmaschine 39 ist somit auch Quelle der Vortriebskraft der Maschine 10.

Das Laufwerk 18 mit einer durch den Doppelpfeil D angedeuteten Laufrichtung weist im dargestellten Beispiel eine radial innere Aufnahme-und Führungsstruktur 38 auf, an der eine umlaufbare Laufkette 40 angeordnet und zur Umlaufbewegung geführt ist.

Die Hubsäule 14 und mit ihr das Laufwerk 18 ist durch eine nicht näher dargestellte Lenkvorrichtung um eine Lenkachse S drehbar. Bevorzugt zusätzlich, aber auch alternativ kann die Hubsäule 16 und mit ihr das Laufwerk 20 durch eine Lenkvorrichtung um eine zur Lenkachse S parallele Lenkachse drehbar sein.

Der Fahrstand 24 ist von einem Schutzdachaufbau 42 bedeckt, welcher ein Schutzdach 44 umfasst, das über eine vordere Scheibenanordnung 46 und eine hintere Wandungsanordnung 48 mit dem Maschinenrahmen 12 bzw. Maschinenkörper 13 verbunden ist. Das Schutzdach 44 ist mittels einer Bewegungsführung 50 heb- und senkbar am Maschinenrahmen 12 angeordnet. In Figur 1 ist das Schutzdach 44 in seiner angehobenen Betriebsstellung gezeigt, in welcher die Maschine 10 für einen Bearbeitungsbetrieb bereit ist.

Der Maschinenrahmen 12 der Maschine 10 weist an seiner zur Aufstandsoberfläche AO des Untergrunds U hinweisenden Unterseite 12a eine Wartungsklappe 52 auf, welche in Figur 1 in ihrer abgesenkten Wartungsposition dargestellt ist.

In der abgesenkten Wartungsposition macht die Wartungsklappe 52 eine unter der Brennkraftmaschine 39 gelegene und in Figur 1 durch Strichlinierung angezeigte Wartungsöffnung 54 frei, durch welche hindurch die Brennkraftmaschine 39 von unten zugänglich ist.

Abgesehen vom Öffnen und Schließen der Wartungsöffnung 54 erfüllt die Wartungsklappe 52 eine weitere Funktion, indem sie an ihrer Innenseite 52a unterschiedliche Funktionsformationen 56 und 58 aufweist, welche Wartungshandlungen an der Maschine 10, genauer an der Fräswalze 32, unterstützen. Die Innenseite 52a ist dabei jene Seite der Wartungsklappe 52, welche in der Betriebsbereitschaftsposition, in der die entgegengesetzte Außenseite 52b der Wartungsklappe 52 bündig mit der übrigen Unterseite 12a des Maschinenrahmens 12 ist, vom Untergrund U weg weist. Die Außenseite 52b weist in der Betriebsbereitschaftsposition dementsprechend zum Untergrund U hin.

Eine erste Funktionsformation ist dabei beispielhaft ein klappbarer Wartungssitz 56, welcher um eine zur Nickachse Ni parallele Sitzschwenkachse SA schwenkbar ist zwischen den Figur 1 gezeigten Gebrauchsstellung, in welcher sich ein Mechaniker oder/und der Maschinenführer darauf setzen kann, und einer Nicht-Gebrauchsstellung.

Eine zweite Funktionsformation ist ein Staufach 58, in welchem ein Meißelkasten 60 mit Ersatz-Fräsmeißeln für die Fräswalze 32 aufgenommen sein kann. Vorteilhafterweise sind mehrere Staufächer 58 auf der Innenseite 52a der Wartungsklappe 52 vorgesehen, um eine möglichst große Anzahl an Ersatz-Fräsmeißeln dort bereitstellen zu können.

Zur Vermeidung von Kollisionen kann der Wartungssitz 56 längs der Nickachse Ni zu den Staufächern 58 versetzt angeordnet sein.

Mit ihrer der Innenseite 52a entgegengesetzten Außenfläche 52b liegt die Wartungsklappe 52 in der Wartungsposition auf einer Abrollfläche des Laufwerks 20 auf. Eine weitere Abstützung der Wartungsklappe 52 in der Wartungsposition ist daher nicht erforderlich.

An einem dem Untergrund U in der Wartungsposition ferner gelegenen Anlenk-Endbereich 52c ist die Wartungsklappe 52 um eine Klappenschwenkachse RW schwenkbar an den Maschinenrahmen 12 angelenkt. Die Klappenschwenkachse RW verläuft parallel zur Nickachse Ni.

Die Auflage der Wartungsklappe 52 auf der Abrollfläche des Laufwerks 20 erfolgt in einem dem Anlenk-Endbereich 52c entgegengesetzten Anlage-Endbereich 52d. In diesem Anlage-Endbereich 52d ist die Wartungsklappe 52 abgewinkelt ausgebildet, wobei die Abwinkelachsen, um welche zwei unmittelbar benachbarte, Wartungsklappenabschnitte relativ zu einander abgewinkelt sind, jeweils vorzugsweise parallel zur Nickachse Ni verlaufen.

Die Wartungsklappe 52 ist längs der Rollachse Ro zwischen der Fräswalze 32 und dem hinteren Teilfahrwerk 22b angeordnet, sodass bei in die Wartungsposition abgesenkter Wartungsklappe 52 ein auf dem dort bereitgestellten Wartungssitz 56 sitzender Mechaniker/Maschinenführer über die gesamte axiale Länge der Fräswalze 32 Wartungsarbeiten an dieser ausführen kann.

Zur Erleichterung der Aufnahme von Staufächern 58, welche dann, wenn sie mit Meißelkästen 60 beladen sind, ein erhebliches Gewicht zu tragen haben, kann auf der Innenseite 52a der Wartungsklappe eine Tragformation 62, etwa in Gestalt eines von der Innenseite 52a der Wartungsklappe 52 abstehenden Blechs, vorgesehen sein, welche eine Staufächern 58 aufnehmende ebene Fläche auf der Innenseite 52a im gekröpften Bereich des Anlage-Endbereichs 52d vergrößert.

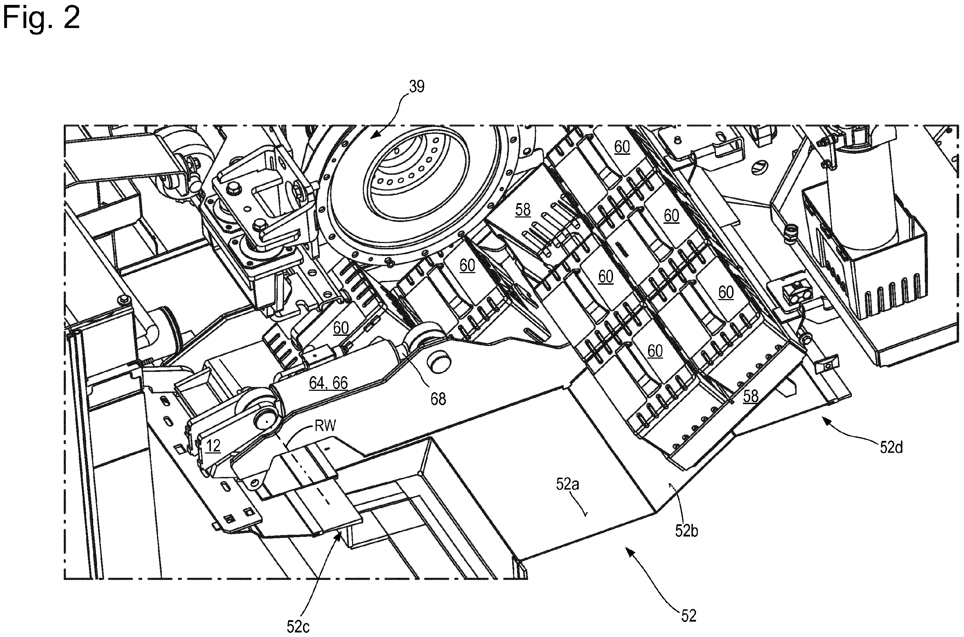

In Figur 2 ist die Wartungsklappe 52 in ihrer angehobenen Betriebsbereitschaftsposition ausgehend von einer Betrachterposition im Inneren des Maschinenkörpers 13 gezeigt. Am oberen Bildrand sind Teile der über der Wartungsklappe 52 gelegenen Brennkraftmaschine 39 zu erkennen. Dort ist zu sehen, dass eine Vielzahl von Meißelkästen 60 an der Wartungsklappe 52 bereitgestellt sein können. Der Wartungssitz 56 ist in Figur 2 nicht dargestellt.

Wie in Figur 2 zu erkennen ist, ist die Wartungsklappe 52 durch einen Aktuator 64, beispielsweise durch eine hydraulisch oder pneumatisch betätigbare Kolben-Zylinder-Anordnung, zwischen der in Figur 1 dargestellten abgesenkten Wartungsposition und den Figur 2 dargestellten angehobenen Betriebsbereitschaftsposition verlagerbar. Der Aktuator 64 weist daher einen am Maschinenrahmen 12 angelenkten Zylinder 66 und eine aus dem Zylinder 66 aus- und in diesen einfahrbare Kolbenstange 68 auf, welche an der Wartungsklappe 52 angelenkt ist.

Überraschend ist der Aktuator 64 an dem der Klappenschwenkachse RW näher gelegenen Anlenk-Endbereich 52c der Wartungsklappe 52 angeordnet, wo zur Verlagerung der Wartungsklappe 52 aufgrund der dort herrschenden Hebelverhältnisse erheblich höhere Verlagerungskräfte erforderlich sind, als wenn der Aktuator 64 am entgegengesetzten Anlage-Endbereich 52d vorgesehen wäre. Allerdings wäre ein am Anlage-Endbereich 52d vorgesehener Aktuator 64 unter Umständen ein Kollisionshindernis für einen in der Nähe des Anlage-Endbereichs 52d arbeitenden Mechanikers/Maschinenführers. Um dieses Kollisionsrisiko und das damit einhergehende Verletzungsrisiko auszuschließen oder wenigstens zu reduzieren, ist der Aktuator 64, wie dargestellt, am Anlenk-Endbereich 52c vorgesehen. Der Aktuator 64 ist so dimensioniert, dass er die zur Verlagerung der Wartungsklappe 52 zwischen ihren Betriebspositionen notwendige Kraft alleine aufbringt.

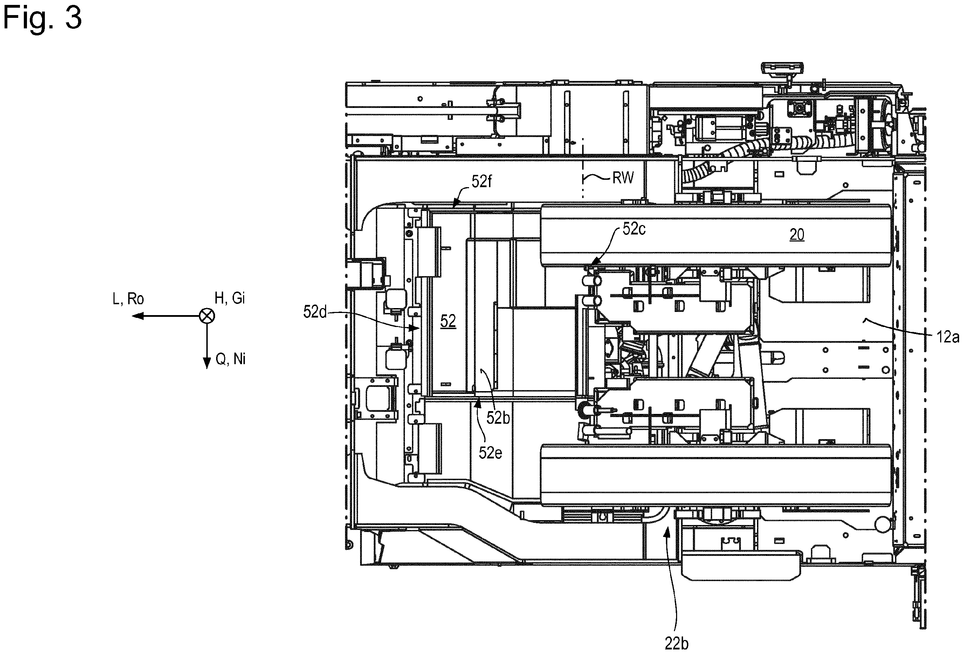

Figur 3 zeigt eine Unteransicht der Maschine 10 im Bereich des hinteren Teilfahrwerk 22b, wobei die Wartungsklappe 52 sich in ihrer angehobenen Betriebsbereitschaftsposition befindet. Vorzugsweise erstreckt sich die Wartungsklappe 52 längs der Nickachse Ni auf keiner Seite bis zu einem der Seitenränder der Maschine 10, sondern die Wartungsklappe 52 endet längs der Nickachse Ni mit Abstand von jedem der Seitenränder der Maschine 10. Die Seitenränder 52e und 52f sind in Figur 3 kenntlich gemacht.

## Patentansprüche

1. Bodenbearbeitungsmaschine (10), wie etwa Straßenfräse (10), Recycler, Stabilisierer oder Surface-Miner, mit einem Fahrwerk (22) und einem vom Fahrwerk (22) getragenen Maschinenrahmen (12), wobei die Bodenbearbeitungsmaschine (10) eine Fräswalze (32) zur Bodenbearbeitung aufweist, **dadurch gekennzeichnet, dass**
die Bodenbearbeitungsmaschine (10) auf einer zum Aufstandsuntergrund der Maschine (10) hin weisenden Unterseite (12a) des Maschinenrahmens (12) eine zwischen einer angehobenen Betriebsbereitschaftsposition und einer abgesenkten Wartungsposition bewegliche Wartungsklappe (52) aufweist und, dass die Wartungsklappe (52) auf ihrer in der Betriebsbereitschaftsposition vom Aufstandsuntergrund (U) weg weisenden Innenseite (52a) wenigstens eine eine Wartungshandlung unterstützende Funktionsformation (56, 58) aufweist, wobei die Funktionsformation (56, 58) wenigstens ein Staufach (58) umfasst, welches zur Aufnahme von Behältern zur Aufnahme und transportablen Bereitstellung eines oder mehrerer Fräsmeißel als Ersatz für bereits an der Fräswalze (32) angeordnete Fräsmeißel ausgebildet ist.

2. Bodenbearbeitungsmaschine (10) nach Anspruch 1,
**dadurch gekennzeichnet, dass** die Wartungsklappe (52) eine Mehrzahl von Staufächern (58) umfasst, welche zur Aufnahme von Behältern zur Aufnahme und transportablen Bereitstellung eines oder mehrerer Fräsmeißel als Ersatz für bereits an der Fräswalze (32) angeordnete Fräsmeißel ausgebildet ist.

3. Bodenbearbeitungsmaschine (10) nach einem der vorhergehenden Ansprüche,
**dadurch gekennzeichnet, dass** die Funktionsformation (56, 58) einen Wartungssitz (56) für einen zur Durchführung der Wartungshandlung bestimmten Mechaniker aufweist, insbesondere einen zwischen einer Nicht-Gebrauchsstellung und einer Gebrauchsstellung verlagerbaren Wartungssitz (56) aufweist.

4. Bodenbearbeitungsmaschine (10) nach einem der vorhergehenden Ansprüche,
**dadurch gekennzeichnet, dass** entgegengesetzte Endbereiche (52c, 52d) der Wartungsklappe (52) in der Wartungsposition unterschiedlich nahe an den Aufstandsuntergrund (U) angenähert sind, wobei der in der Wartungsposition stärker an den Aufstandsuntergrund (U) angenäherte Anlage-Endbereich (52d) dazu ausgebildet ist, in der Wartungsposition auf einem Abschnitt des Fahrwerks (22), insbesondere auf einer Abrollfläche eines auf dem Aufstandsuntergrund (U) abrollenden Laufwerks (18, 20), in Anlageeingriff zu sein.

5. Bodenbearbeitungsmaschine (10) nach Anspruch 4,
**dadurch gekennzeichnet, dass** der Anlage-Endbereich (52d) abgewinkelt ist.

6. Bodenbearbeitungsmaschine (10) nach einem der vorhergehenden Ansprüche,
**dadurch gekennzeichnet, dass** der Maschinenrahmen (12) an seiner Unterseite (12a) eine Wartungsöffnung (54) aufweist, welche einen Zugang zu einer Funktionsbaugruppe (39), insbesondere zu einer Brennkraftmaschine (39), der Bodenbearbeitungsmaschine (10) ermöglicht, wobei die Wartungsklappe (52) in ihrer Betriebsbereitschaftsposition die Wartungsöffnung (54) verschließt und in ihrer Wartungsposition freigibt.

7. Bodenbearbeitungsmaschine (10) nach einem der vorhergehenden Ansprüche,
**dadurch gekennzeichnet, dass** das Fahrwerk (22) ein dem vorderen Maschinenende näher gelegenes vorderes Teilfahrwerk (22a) und ein dem hinteren Maschinenende näher gelegenes hinteres Teilfahrwerk (22b) aufweist, wobei die Fräswalze (32) längs der Rollachse (Ro) der Maschine (10) zwischen dem vorderen (22a) und dem hinteren Teilfahrwerk (22b) angeordnet ist und wobei die Wartungsklappe (52) zwischen einem der Teilfahrwerke (22a, 22b), vorzugsweise dem hinteren Teilfahrwerk (22b), und der Fräswalze (32) angeordnet ist.

8. Bodenbearbeitungsmaschine (10) nach einem der vorhergehenden Ansprüche,
**dadurch gekennzeichnet, dass** sie einen Aktuator (64) aufweist, welcher zwischen dem Maschinenrahmen (12) und der Wartungsklappe (52) derart angeordnet ist, dass durch seine Betätigung die Wartungsklappe (52) zu einer Bewegung zwischen ihren Positionen: Betriebsbereitschaftsposition und Wartungsposition, antreibbar ist.

9. Bodenbearbeitungsmaschine (10) nach einem der vorhergehenden Ansprüche,
**dadurch gekennzeichnet, dass** die Wartungsklappe (52) zwischen ihren Positionen: Betriebsbereitschaftsposition und Wartungsposition, um eine Klappenschwenkachse (RW) verschwenkbar ist, insbesondere nur verschwenkbar ist, wobei bevorzugt die Klappenschwenkachse (RW) parallel zur Nickachse (Ni) der Maschine (10) orientiert ist.

10. Bodenbearbeitungsmaschine (10) nach den Ansprüchen 8 und 9,
**dadurch gekennzeichnet, dass** der Aktuator (64) näher bei dem Endbereich (52c) der Wartungsklappe (52) angeordnet ist, welcher näher bei der Klappenschwenkachse (RW) gelegen ist.

## Claims

1. An earth working machine (10), for example a road milling machine (10), recycler, stabilizer, or surface miner, having a propelling unit (22) and a machine frame (12) carried by the propelling unit (22), the earth working machine (10) comprising a milling drum (32) for earth working,
**characterized in that** the earth working machine (10) comprises, on an underside (12a) of the machine frame (12) facing toward the supporting substrate of the machine (10), a maintenance door (52) that is movable between a raised operational readiness position and a lowered maintenance position and **in that** the maintenance door (52) comprises, on its inner side (52a) that faces away from the supporting substrate (U) in the operational readiness position, at least one functional configuration (56, 58) that assists a maintenance operation, wherein the functional configuration (56, 58) encompasses at least one storage compartment (58) which is adapted to receive containers for receiving and furnishing in a transportable fashion one or more milling bits as replacement for milling bits already arranged on a milling drum (32).

2. The earth working machine (10) according to Claim 1,
**characterized in that** the functional configuration (56, 58) encompasses a plurality of storage compartments (58) which are adapted to receive containers for receiving and furnishing in a transportable fashion one or more milling bits as replacement for milling bits already arranged on a milling drum (32).

3. The earth working machine (10) according one of the preceding claims,
**characterized in that** the functional configuration (56, 58) comprises a maintenance seat (56) for a technician determined to execute a maintenance operation displaceable between a non-use position and a use position.

4. The earth working machine (10) according to one of the preceding claims,
**characterized in that** oppositely located end regions (52c, 52d) of the maintenance door (52) approach the supporting substrate (U) to within different distances in the maintenance position, the abutment end region (52d), which comes closer to the supporting substrate (U) in the maintenance position, being embodied to be in abutting engagement, in the maintenance position, with a portion of the propelling unit (22), in particular with a rolling surface of a drive unit (18, 20) that rolls on the supporting substrate (U).

5. The earth working machine (10) according to Claim 4,
**characterized in that** the abutment end region (52d) is bent.

6. The earth working machine (10) according to one of the preceding claims,
**characterized in that** the machine frame (12) comprises on its underside (12a) a maintenance opening (54) that enables access to a functional subassembly (39), in particular to an internal combustion engine (39), of the earth working machine (10), the maintenance door (52) closing off the maintenance opening (54) in its operational readiness position and opening it up in its maintenance position.

7. The earth working machine (10) according to one of the preceding claims,
**characterized in that** the propelling unit (22) comprises a front partial propelling unit (22a) located closer to the front end of the machine and a rear partial propelling unit (22b) located closer to the rear end of the machine, the milling drum (32) being arranged along the roll axis (Ro) of the machine (10) between the front (22a) and the rear partial propelling unit (22b), and the maintenance door (52) being arranged between one of the partial propelling units (22a, 22b), preferably the rear partial propelling unit (22b), and the milling drum (32).

8. The earth working machine (10) according to one of the preceding claims,
**characterized in that** it comprises an actuator (64) that is arranged between the machine frame (12) and the maintenance door (52) in such a way that as a result of actuation thereof, the maintenance door (52) is drivable to move between its positions: operational readiness position and maintenance position.

9. The earth working machine (10) according to one of the preceding claims,
**characterized in that** wherein the maintenance door (52) is pivotable, in particular only pivotable, between its positions: operational readiness position and maintenance position around a door pivot axis (RW), the door pivot axis (RW) preferably being oriented parallel to the pitch axis (Ni) of the machine (10).

10. The earth working machine (10) according to Claims 8 and 9,
**characterized in that** the actuator (64) is arranged closer to that end region (52c) of the maintenance door (52) which is located closer to the door pivot axis (RW).

## Revendications

1. Machine de traitement du sol (10), telle qu'une fraiseuse routière (10), un recycleur, un stabilisateur ou un mineur de surface, avec un train de roulement (22) et un cadre de machine (12) supporté par le train de roulement (22), dans laquelle la machine de traitement du sol (10) comprend un rouleau de fraisage (32) pour le traitement du sol, **caractérisée en ce que** la machine de traitement du sol (10) comporte, sur une face inférieure (12a) du cadre de machine (12) orientée vers la base d'appui de la machine (10), un clapet d'entretien (52) qui peut être déplacé entre une position de disponibilité opérationnelle relevée et une position d'entretien abaissée, et, **en ce que** le clapet d'entretien (52) présente sur sa face intérieure (52a) opposée à la base d'appui (U) en position de disponibilité opérationnelle au moins une formation fonctionnelle (56, 58) soutenant une action d'entretien, dans laquelle la formation fonctionnelle (56, 58) comprend au moins un compartiment de stockage (58) qui est adapté pour recevoir des conteneurs pour recevoir et mettre à disposition de manière transportable un ou plusieurs outils de fraisage en remplacement d'outils de fraisage déjà disposés sur le rouleau de fraisage (32).

2. Machine de traitement du sol (10) selon la revendication 1 ,
**caractérisée en ce que** le clapet d'entretien (52) comprend une pluralité de compartiments de stockage (58), adaptés pour recevoir des conteneurs destinés à recevoir et à mettre à disposition de manière transportable un ou plusieurs outils de fraisage en remplacement des outils de fraisage déjà disposés sur le rouleau de fraisage (32).

3. Machine de traitement du sol (10) selon l'une des revendications précédentes,
**caractérisée en ce que** la formation fonctionnelle (56, 58) comprend un siège d'entretien (56) pour un mécanicien destiné à effectuer l'opération d'entretien, en particulier un siège d'entretien (56) qui est déplaçable entre une position de non-utilisation et une position d'utilisation.

4. Machine de traitement du sol (10) selon l'une des revendications précédentes,
**caractérisée en ce que** des parties d'extrémité opposées (52c, 52d) du clapet d'entretien (52) en position d'entretien sont approchées différemment à la base d'appui (U), dans lequel la zone d'extrémité de contact (52d) qui, en position d'entretien, est plus proche de la base d'appui (U), est adaptée pour être en contact en position d'entretien avec une section du train de roulement (22), en particulier avec une surface de roulement d'un train de roulement (18, 20) roulant sur la base d'appui (U).

5. Machine de traitement du sol (10) selon la revendication 4,
**caractérisée en ce que** la zone d'extrémité de contact (52d) est inclinée.

6. Machine de traitement du sol (10) selon l'une des revendications précédentes,
**caractérisée en ce que** le cadre de machine (12) présente sur sa face inférieure (12a) une ouverture d'entretien (54) qui permet d'accéder à un ensemble fonctionnel (39), en particulier à un moteur à combustion interne (39), de la machine de traitement du sol (10), dans laquelle le clapet d'entretien (52) ferme l'ouverture d'entretien (54) dans sa position de disponibilité opérationnelle et l'ouvre dans sa position d'entretien.

7. Machine de traitement du sol (10) selon l'une des revendications précédentes,
**caractérisée en ce que** le train de roulement (22) comprend un train de roulement partiel avant (22a) plus proche de l'extrémité avant de la machine et un train de roulement partiel arrière (22b) plus proche de l'extrémité arrière de la machine, le rouleau de fraisage (32) étant disposé dans le sens longitudinal de l'axe de roulement (Ro) de la machine (10) entre le train de roulement partiel avant (22a) et le train de roulement partiel arrière (22b) et dans lequel le clapet d'entretien (52) est disposé entre l'un des trains de roulement partiels (22a, 22b), de préférence le train de roulement partiel arrière (22b), et le rouleau de fraisage (32).

8. Machine de traitement du sol (10) selon l'une des revendications précédentes,
**caractérisée en ce qu'**elle comprend un actionneur (64) disposé entre le cadre de machine (12) et le clapet d'entretien (52) de telle sorte que son actionnement provoque le déplacement du clapet d'entretien (52) entre ses positions: position de disponibilité opérationnelle et position d'entretien.

9. Machine de traitement du sol (10) selon l'une des revendications précédentes,
**caractérisé en ce que** le clapet d'entretien (52) peut entre ses positions - position de disponibilité opérationnelle et position d'entretien - pivoter autour d'un axe de pivotement de clapet (RW), en particulier ne peut que pivoter, dans lequel l'axe de pivotement de clapet (RW) est de préférence orienté parallèlement à l'axe de tangage (Ni) de la machine (10).

10. Machine de traitement du sol (10) selon les revendications 8 et 9,
**caractérisée en ce que** l'actionneur (64) est disposé plus près de la zone d'extrémité (52c) du clapet d'entretien (52) qui est située plus près de l'axe de pivotement de clapet (RW).
